(19) Europäisches Patentamt European Patent Office Office européen des brevets

(11) **EP 3 569 859 B1**

(12) **EUROPEAN PATENT SPECIFICATION**

(45) Date of publication and mention of the grant of the patent:
**28.09.2022 Bulletin 2022/39**

(21) Application number: **18172135.8**

(22) Date of filing: **14.05.2018**

(51) International Patent Classification (IPC):
**F03D 7/02** *(2006.01)* **F03D 17/00** *(2016.01)*

(52) Cooperative Patent Classification (CPC):
**F03D 17/00; F03D 7/0204;** F03D 7/048;
F05B 2260/80; F05B 2270/20; F05B 2270/321;
F05B 2270/329; F05B 2270/335; F05B 2270/802;
Y02E 10/72

(54) **WIND TURBINE EFFICIENCY IMPROVEMENT METHODS RELATED TO WIND SENSOR MISALIGNMENT**

VERFAHREN ZUR VERBESSERUNG DES WIRKUNGSGRADES VON WINDTURBINEN IM ZUSAMMENHANG MIT DER FEHLAUSRICHTUNG VON WINDSENSOREN

PROCÉDÉS D'AMÉLIORATION DE L'EFFICACITÉ D'UNE TURBINE ÉOLIENNE ASSOCIÉS À UN DÉFAUT D'ALIGNEMENT D'UN CAPTEUR DE VENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.11.2019 Bulletin 2019/47**

(73) Proprietor: **Laborelec CVBA**
**1630 Linkebeek (BE)**

(72) Inventor: **DECLERCQ, Bruno**
**1630 Linkebeek (BE)**

(74) Representative: **Arnold & Siedsma**
**Bezuidenhoutseweg 57**
**2594 AC The Hague (NL)**

(56) References cited:
**WO-A1-2017/108063 US-A1- 2017 268 484**

## Description

### Technical field

The invention relates to a method for determining the misalignment of a wind orientation sensor attached to a wind turbine with respect to an axis of a rotor of said wind turbine. The invention also relates to a method for performing yaw control of a wind turbine, to a computer system, and to a wind turbine arrangement.

### Background of the invention

The (power) performance of wind turbines is important and heavily influenced by the orientation of the wind turbine relative to the wind direction, more in particular the axis of the rotor should be oriented aligned with or parallel to said wind direction. Therefore, wind turbines are provided with means for rotating and adjusting the head of the wind turbine to achieve such parallel orientation, based on wind orientation measurements. This is called yaw control.

The above indicates that a precise measurement of the wind direction is important to achieve optimal (power) performance of wind turbines. The precision thereof depends on the alignment of said wind orientation sensor with the axis of the rotor of the wind turbine. However, misalignment thereof occurs often and upon a substantial amount, leading to lower than expected performance, despite the use of advanced yaw control methods.

In the field, this problem is well known and cured by installing advanced, i.e. expensive and risky position measurements in order to perform an in-situ calibration of the wind orientation sensor with respect to the axis on the rotor of the wind turbine. Besides costs and safety risks involved, such measurements may also turn out to be unnecessary when there is no misalignment occurring.

Prior art is disclosed in US 2017/268484 A1 and WO 2017/108063 A1.

### Aim of the invention

It is the aim of the invention to avoid the above indicated, sometimes unnecessary and risky misalignment measurements and to provide at least reliable indication of the occurrence of such misalignment (which may motivate to still apply the known misalignment methods) and/or apply correction for the determined misalignment via the invented methods directly in the yaw control methods.

### Summary of the invention

The invention is defined by the appended claims.

In a first aspect, the invention leverages on the observation that ideally a wind turbine has a maximum (power) performance when the axis of its rotor is parallel with the wind direction, hence for a wind direction measurement, relative to said axis, being zero. However when the wind orientation sensor is (systematically) misaligned with respect to the axis, when observing a curve defined as the wind turbine performance versus wind orientation, such maximum (power) performance will occur at an offset value, indicative for said misalignment. Note that in essence underlying to the method is at least implicitly a model of the relationship between performance and orientation, hence said method can be denoted model-based, and in an embodiment of the invention said model can be more or less explicitly used e.g. as a reference model for a fit based approach for determining a curve characteristic.

Hence, a method according to claim 1 is provided.

According to an embodiment, the method comprises prior to said step of computing said characteristic, a smoothing step, e.g. moving average is applied.

The above-indicated method works ideally when said performance orientation data is obtained under entirely the same (environmental or weather) conditions. However in reality such conditions (like wind speed) may vary during the observation period. According to the invention, the data is first classified in various data sets, more or less assumed to have substantially similar conditions. According to claim 1, there is a step of combining results.

Such combining can be based on a weighted sum, wherein the weights are for instance based on the measure indicative for the quality of the computation of the above-mentioned characteristic of the respective curves e.g. the goodness of the fit used.

According to the invention the above classification method does not require other measurements than the wind direction and power performance as said classification is based on the time of measurement of said data points (assuming that nearby times and/or similar time period during a variety of days having sufficient similar conditions).

In another embodiment an extra (often already available) measurement such as the wind speed at the time of measurement of said data points is used as extra information to classify the data points. In general, the method for determining misalignment in accordance with the invention, will rely on the measured wind speed, as being measured by a standard anemometer present on each wind turbine, and then being further used for calculations. According to an embodiment, the measured wind speed needs some correction before being further used for calculations. Such correction can be for instance:

- Correction for air density: whenever the air density deviates from the reference density, the wind speed is corrected in order to represent a constant kinetic energy.
- Correction for instantaneous misalignment: from experience it is known that there can be measurement error on the wind speed whenever the wind turbine has a non-zero wind inflow angle. An empirical relationship is therefore developed based on previous LiDAR measurements.

Both of the above corrections may be preferably taken into account to further improve in the accuracy of the method in accordance with the invention.

In another embodiment an extra (more advanced) measurement such as the measurement of the atmospheric conditions (e.g. measured by a LiDAR system on the ground, or temperature sensors at various locations) at the time of measurement of said data points is used as extra information to classify the data points. Other parameters such as air temperature, air temperature gradient with altitude, turbulence intensity of the wind, etc. may also be used in the classification.

According to an embodiment, a method is also provided for performing yaw control of a wind turbine, based on the determination of the wind orientation sensor misalignment by any of previous methods.

Referring now to a second aspect, not part of the invention, it is noted again that ideally the use of yaw control methods directs a wind turbine for maximum (power) performance by orientating the axis of its rotor, parallel with the wind direction. Instead of determining any misalignment of the wind orientation sensor placed on the wind turbine directly via (costly and risky) position measurements (on the wind turbine head) or via other data processing techniques (as discussed in the first aspect of the invention), this second aspect leverages on the use of position measurement of the axis itself relative to a reference orientation (such as the magnetic north); and compare this measurement with a (high-quality) wind orientation measurement on the ground (such as LiDAR), having a similar position measurement, hence with respect to the same reference orientation. The difference in orientation in a by yaw control method controlled wind turbine is indicative of the misalignment of the wind orientation sensor on the turbine as used by said yaw control methods.

Hence, a method is provided for determining the misalignment of the wind orientation sensor attached to a wind turbine with respect to the axis of the rotor of said wind turbine, the method comprising the steps of: (i) inputting or measuring the position of the axis of the rotor by use of a differential (satellite-based) positioning system, e.g. dual GNSS (Global Navigation Satellite System), relative to a reference orientation, (ii) determining or measuring the wind orientation, relative to the same reference orientation by use of a wind orientation sensor installed on the ground, in the vicinity of said wind turbine, and (iii) computing the difference between said position and said wind orientation, said difference being indicative for said misalignment. A method is also provided for determining such misalignment for a plurality of wind turbines. Further, a method is provided for performing yaw control of a wind turbine, based on previous method for determining the wind orientation sensor misalignment, determining and correcting the wind orientation to a corrected value by said determined wind orientation sensor misalignment, and applying yaw control based on said corrected value of wind orientation to thereby determine yaw control signals.

In an embodiment according to the second aspect, the use of a single wind orientation ground sensor is used for a plurality of wind turbines, relying in that said single wind orientation is representative for said plurality of wind turbines, for the purpose of wind orientation sensor misalignment determination and subsequent correction.

According to an embodiment, a computer system according to claim 9 is provided.

In yet another embodiment, a wind turbine arrangement is provided, comprising a wind turbine and such computer system.

**Brief description of the drawings**

Figure 1 shows an embodiment of the misalignment determination in accordance with first aspect of the invention.
Figure 2 shows an embodiment of the related structural elements of the misalignment determination of Figure 1 and Figure 4 in accordance with first aspect of the invention.
Figure 3 shows a graphical illustration of the underlying hypothesis used in one of the embodiments of Figure 1, Figure 2 or Figure 4 in accordance with first aspect of the invention.
Figure 4 shows further detailed embodiment of the misalignment determination in accordance with first aspect of the invention.
Figure 5 shows an embodiment of embedding the misalignment determination in a yaw control method in accordance with first aspect of the invention.

Figure 6 shows an embodiment of the involved yaw control system and its connection to a wind turbine in accordance with first aspect of the invention.

Figure 7 shows another embodiment of the involved yaw control system and its connection to a wind turbine in accordance with first aspect of the invention.

Figure 8 shows an embodiment of the related structural elements of the misalignment determination of Figure 9 in accordance with the second aspect, which is not part of the invention.

Figure 9 shows an embodiment of the misalignment determination in accordance with second aspect .

Figure 10 shows an embodiment of embedding the misalignment determination in a yaw control method in accordance with second aspect.

Figure 11 shows an embodiment of the involved yaw control system and its connection to a wind turbine in accordance with second aspect.

Figure 12 illustrates schematically a yaw control system connected to a wind turbine according to the art.

Figure 13 illustrates an embodiment of a classical yaw control scheme computing control signals.

Figure 14 illustrates an embodiment of phased and interrelated misalignment determination and yaw control, and alternating phase scheme.

Figure 15 illustrates schematically a wind turbine and the wind directed thereon (a) in case of no yaw misalignment, and (b) in case of yaw misalignment.

Figure 16 shows a flow chart embodiment of misalignment detection and yaw control in accordance with the invention.

Figure 17 shows another flow chart embodiment of misalignment detection and yaw control in accordance with the invention.

Figure 18 illustrates an embodiment of a wind speed filter to be used on the data points determined in accordance with the invention.

Figure 19 illustrates density search boxplots of power efficiency in function of relative misalignment angle in accordance with the invention.

Figure 20 illustrates an embodiment of the misalignment distribution in relation to wind speed in accordance with the invention.

Figure 21 illustrates an overview of output results of the methods used in accordance with the invention

Figure 22 illustrates an embodiment of an efficiency-deviation plot in accordance with the invention.

Figure 23 illustrates an embodiment of a yaw plot with applied polynomial curve fitting in accordance with the invention.

## Detailed description of the invention

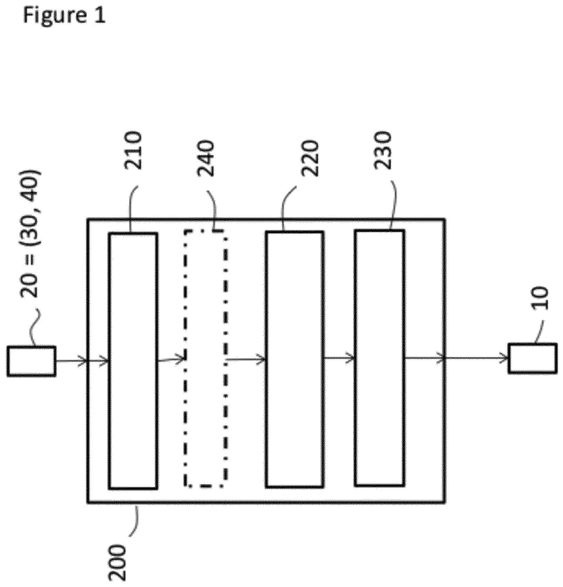

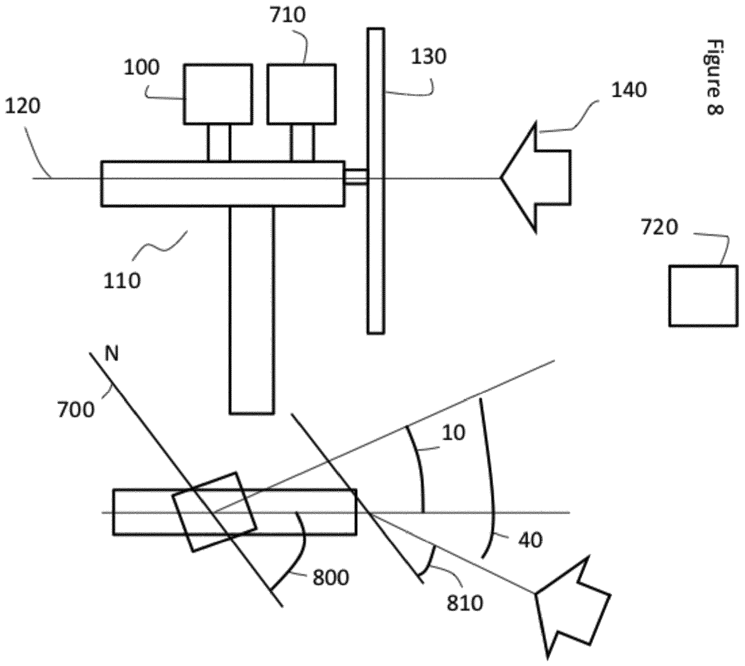

Figures 1 to 7 relate to the first aspect of the invention, whereas Figure 8 to Figure 11 relates to a second aspect not part of the invention.

Ideally the use of yaw control methods directs a wind turbine for maximum (power) performance by orientating the axis of its rotor, parallel with the wind direction.

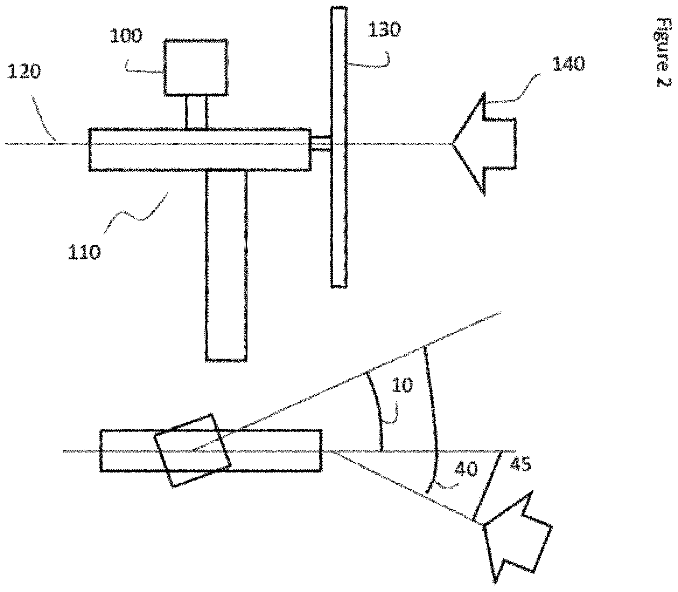

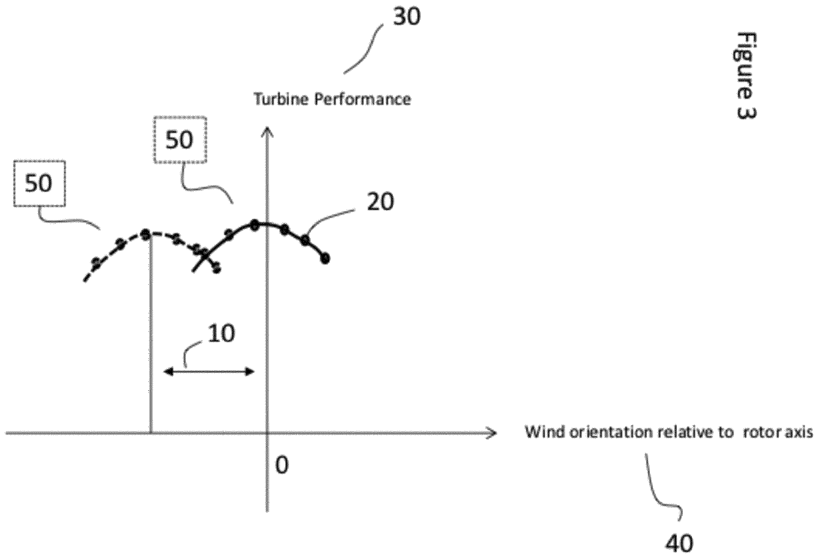

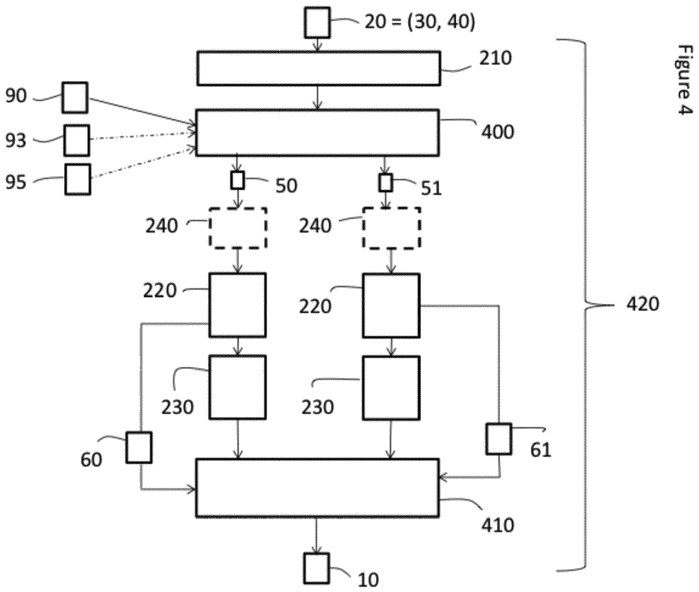

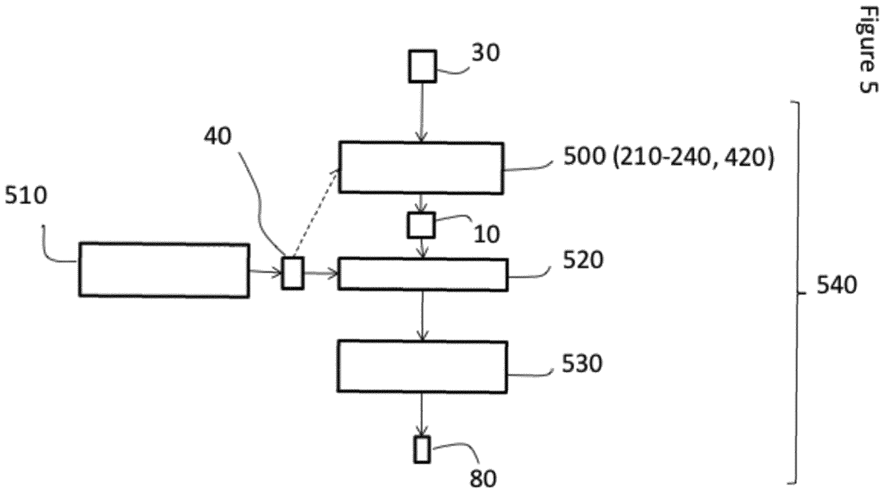

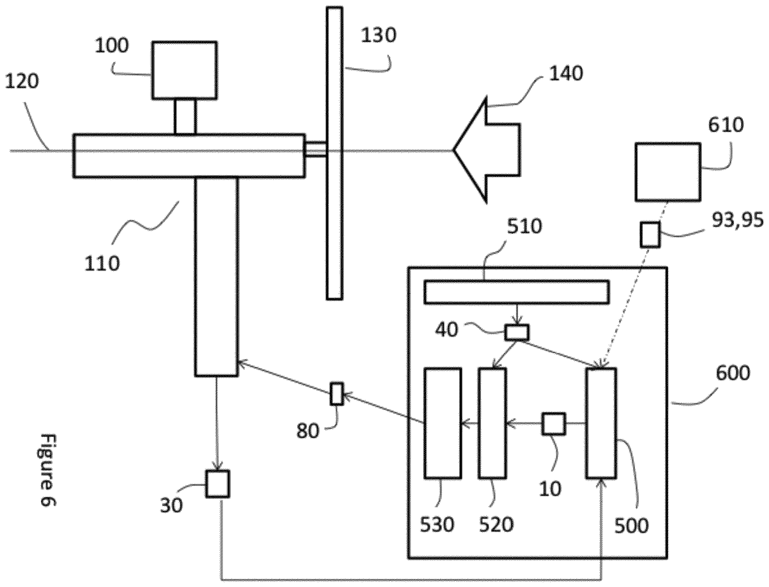

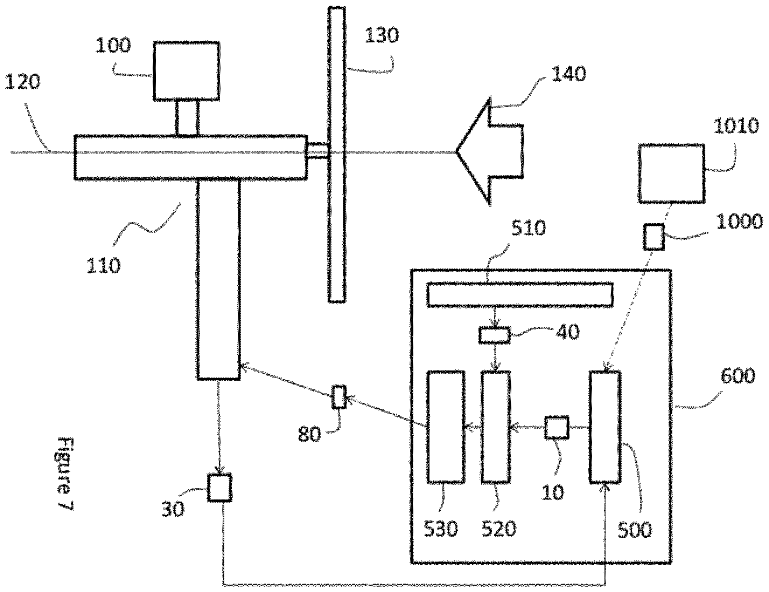

Figure 1 and Figure 4 show embodiments of the misalignment determination in relation to the first aspect of the invention while Figure 2 shows the related structural elements. Figure 3 provides a graphical illustration of the underlying hypothesis (regarding clustering and profiling of data) used in one of the embodiments of the invention. Figure 5 shows the further embedding in a control method while Figure 6 and Figure 7 show the involved control system and its connection to the wind turbine.

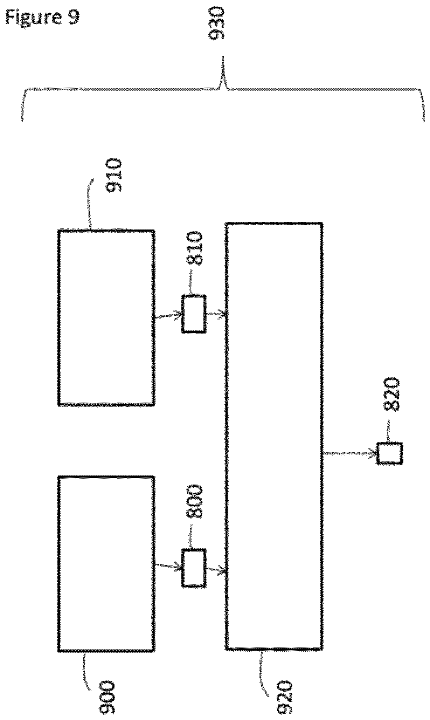

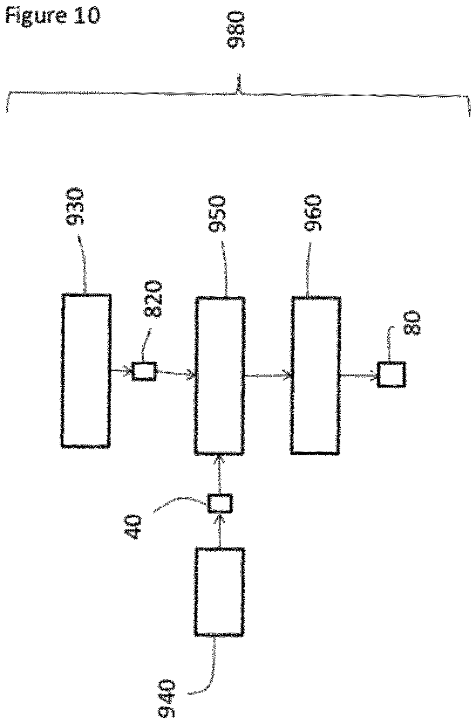

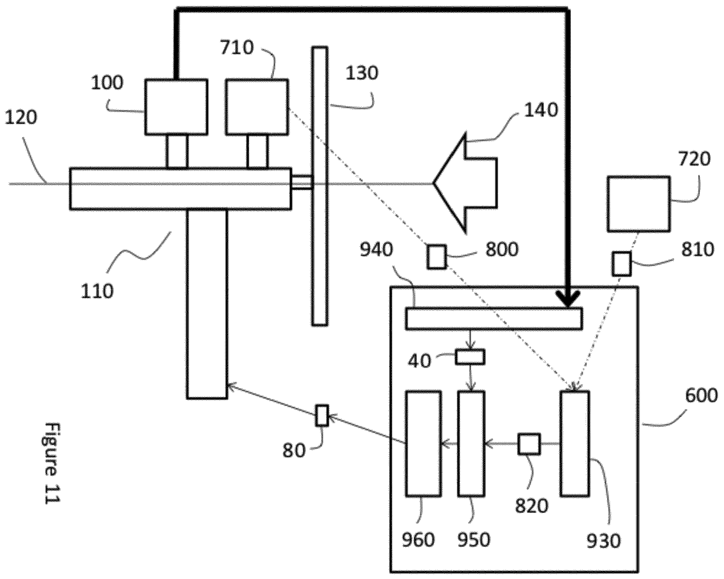

Likewise Figure 9 shows an embodiment of the misalignment determination in relation to the second aspect not part of the invention while Figure 8 shows the related structural elements. Figure 10 shows the further embedding thereof in a control method while Figure 11 shows the involved control system and its connection to the wind turbine.

As shown in Figure 2 and Figure 8, the first and second aspect relate to one or more wind turbines 110 with a rotor 130 having an axis 120 and aims at enhancing performance of said turbines, which is known to be dependent on the orientation of the axis relative to the wind direction of a wind 140. The invention further performs steps such as inputting, computing and determining, which are performed by a computer system 600, connected to the wind turbine 110.

As shown in Figure 6, Figure 7 and Figure 11, the first and second aspect more in particular relate to wind turbines 110 equipped with yaw control and hence with control systems 600 providing yaw control signals 80 determined in one or another way, and the invention especially provides enhanced ways for determining those or at least an enhanced way of determining input signals for those yaw control methods. Note that this embodiment provides an iteration (or feedback loop) through the arrow 30 (wind turbine performance). This provides a possibility to iterate or perform verification after correction, thereby providing an inherent validation of the method.

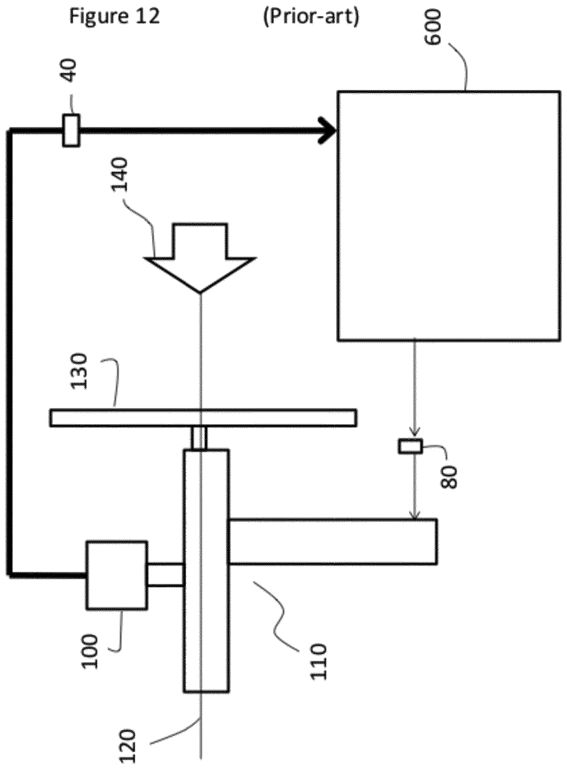

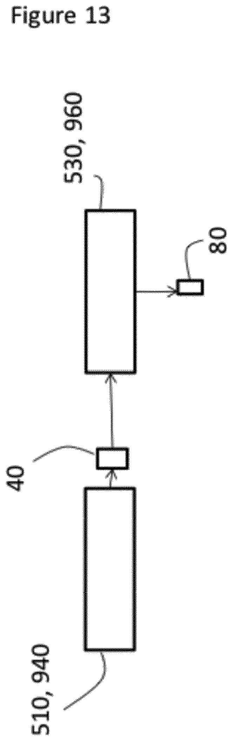

To put the invention for both aspects a bit more in perspective, Figure 12 is provided, which illustrates a general control scheme wherein both the classical control scheme and the invented control schemes fit and to illustrate the key differences between those classical and invented control schemes. As shown the control system 600 computes its control signals 80 from a measurement 40, which is the wind direction as measured by the wind direction sensor 100. Figure 13 illustrates a classical control scheme with steps of fetching from the wind direction sensor 100 the (assumed) wind direction or wind orientation 40 and directly computing the control signals 80 therefrom. Obviously this classical control scheme can only be as good as the quality or reliability of the data 40 provided by the wind direction sensor 100, which is discussed above, and which might be (systematically) wrong. Note that most control systems of wind turbines give the possibility to enter an offset value to the wind direction measurement and hence the invention leverages those possibilities. This allows in-situ calibration of the wind vane. If this option is not available, we may either turn the base of the wind vane to correct for the sensor error or interrupt the data flow to the control signal to correct it by use of additional hardware.

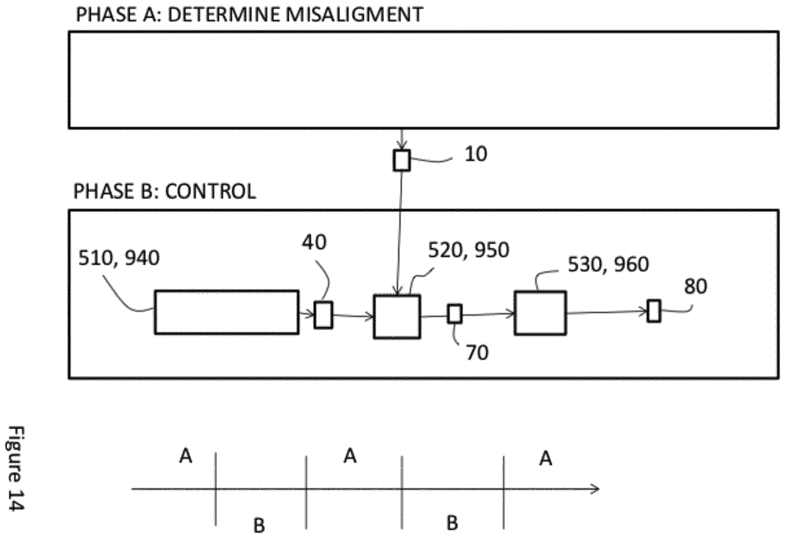

Figure 14 further illustrates that with the invention the wind turbine 110 will operate in phase B under the control scheme but will also have phases A wherein the misalignment 10 is determined (and reported out) and subsequently be used in the phase B. Whether some kind of or the same control is on during phase A is an optional embodiment. Whether some of the signals captured during phase B are re-used during phase A depends on the embodiments of the invention as will be illustrated in more detail below (e.g. in Figure 5). As shown in Figure 14, with the phase B, a modification of the classical control scheme of Figure 13 is found, in that the data 40 is now adapted, corrected with the determined misalignment 10 from phase A.

While the invention is providing enhancements for yaw control methods, more in particular in some embodiments related to the first aspect of the invention deviations from expected performance thereof is used to correct input signals. Some embodiments thereof may benefit on yaw control itself, in that the yaw control is present and used.

misalignment determination methods of the first and second aspect rely on use of needed inputs: in Figure 1 and Figure 2 see inputs 40, 20, while in Figure 4 extra inputs 90, 93, 95, and in Figure 9 the inputs 800, 810 are mentioned. The inputs provide outputs such as misalignment 10 and a particular position difference 820 related to the misalignment 10, being the misalignment 10 of the wind direction sensor 100 with respect to the rotor axis 120 of the wind turbine 100, computed based on the inputted data points. These outputs can then be used to correct input signals for the control scheme, wherein the control input signals may be the same or different from those of the misalignment inputs as shortly addressed above.

In the embodiment of Figure 6, the misalignment determination method relies on use of inputted data points, such as for instance data entry 20, comprising at least of angle information such as the wind orientation 40, obtained for instance from the wind direction sensor 100 mounted on the wind turbine 110, and providing the position of the wind direction as measured by the wind sensor used in combination with other data such as performance information 30, obtained from the generator, driven by the wind turbine rotor. In the ideal world the misalignment 10 is equal to zero or at least known and constant. It is the objective of the invention to get a good estimate of the misalignment 10 and exploit that knowledge.

It is worth noting that hence in this embodiment additional information, not originating from the wind direction sensor 100 but from the wind turbine 110 is used. Furthermore, as clearly depicted in Figure 5, Figure 6 and Figure 7 but also in Figure 13, the wind turbine orientation measurement 40, which is part of the control loop, is further used (see arrow in Figure 5) in the misalignment determination 500 but also corrected by the subsequent outcome thereof and the correction is then further used to determine control signals 80.

Figure 4 illustrates together a few alternative embodiments. In essence the key method 420 of the invention is performed on a plurality of subsets of data 50, 51 (here two are shown but the invention is not limited thereto). The invention shows various inputs 90, 93, 95, which can be used for performing the classification. These can be used separately, together or sequentially.

According to the invention, the classification is based on the time of measurement of the data points. The invention then requires a step of (smart) combining the individual outcomes within the method 420, wherein optionally an estimate of the accuracy of the weights 60, 61 can be taken into account.

Figure 5 shows a particular way of embedding the previous method in a yaw control method. It is worth noting that the angle information 40 is used twice but in a different way. Indeed the angle information 40 is used while monitoring angle versus turbine performance (data couple 20) in step 500 for determining the misalignment 10 while in step 520 the angle information 40 gets corrected into corrected value 70 and is used during the usual yaw control phase.

Figure 6 shows how the wind turbine 110 and the computer system 600 used for performing the methods are interacting, in particular that the source of the angle information 40 is in this embodiment the wind sensor 100 on the wind turbine 110 and the performance information 30 is used. The potential source or sources of additional information 93, 95 (used in the classification embodiment) are indicated. The final control signal 80 for performing yaw control is shown also.

This figure illustrates how signals or information signals from various parts (generator, wind sensor) of the wind turbine 110 and/or equipment (like a ground sensor 610) outside the wind turbine are used. Within Figure 6 the classical control lines are shown in bold. The interruption for the correction then becomes clearly visible.

Figure 7 shows an alternative embodiment wherein the wind direction as used in the first step of misalignment determination is provided by an external device 1010, which is for instance the same device as used for the more advanced classification based techniques.

Figure 8 provides the alternative layout of Figure 2 in which the second aspect, which is not part of the invention, is used. Figure 10, embedding the method 930 of Figure 9, is the alternative for Figure 5, embedding the method 200, 420 of Figure 1 and Figure 4 respectively. This embodiment of Figure 8 uses another type of measurements, in particular (precise) rotor position 800 relative to a reference (determined by use of device 710), in combination with a wind direction determination relative to a same reference, or at least a reference with a known relationship with respect to the previous reference e.g. by use of a device 720 separate from the wind turbine 110. Note that here re-use of wind orientation data 40 is not feasible. Note that, contrary to the first aspect of the invention, rotor performance 30 is not used in the misalignment determination here.

**Description of some exemplary embodiments in accordance with the invention**

Recall that wind turbines are designed to face the wind in order to harvest as much energy as possible. If the nacelle or rotor axis is not aligned with the wind direction, the wind turbine produces less power. Such yaw misalignment leads to the loss of significant quantities of energy, and as a consequence of profit for wind farm owners. More than 5% of a turbine APE (Available Potential Energy) can be lost when a turbine presents a static yaw misalignment, i.e. a non-zero mean error of yaw misalignment.

The invention relates to an algorithm able to detect misaligned turbines within a wind farm and to estimate their static yaw misalignment. The main advantage of this algorithm is that it uses only the standard data of wind turbines and does not require any additional equipment nor large computing capability. This technique has also the advantage to be inexpensive and to provide results within a short time.

By providing a general overview of the static yaw misalignment within a wind farm, the invention allows for correcting only turbines with important misalignment with the nacelle- LiDAR or GNSS techniques. As a consequence, measurement campaigns on turbines with minor or mild static misalignment are avoided. The algorithm can be used to perform a screening of whole fleets based on standard data.

In the next section the theoretical aspects on which the invention and related algorithms are based are first further elaborated on. In a second part, an embodiment of the invention algorithm is explained. Its structure is described as well as the numerical methods it uses. Finally, different alternatives are discussed.

*Theoretical aspects*

A wind turbine converts wind kinetic energy into electrical energy. The electrical power that can be extracted depends on normal wind velocity $v_n$, swept area A and air density p :

$$P = c_p P_{th} = c_p \frac{16}{27} P_{wind} = c_p \frac{8}{27} \rho A {v_n}^3$$

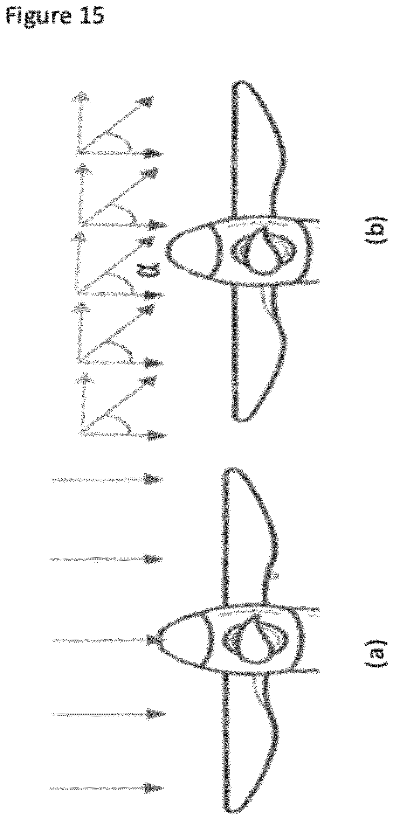

As shown in Figure 15, in the case of a yaw misalignment, the normal component of wind velocity *v* is smaller than the available wind speed *v* and decreases with the cosine of the angle made by the nacelle direction and the wind direction : $v_n = v \cos \alpha$.

The formula giving the active power according to the wind speed can be rewritten as:

$$P = c_p \frac{8}{27} \rho A v^3 cos^3 \alpha$$

To maximize the power extracted from the wind, the nacelle must be aligned with the wind direction.

Unlike the GNSS/ground-LiDAR and nacelle-LiDAR techniques, the static yaw misalignment cannot be detected by averaging the difference between the measured wind and turbine directions. This is because the wind direction may be affected by a static error (= the static yaw misalignment) caused by a calibration error. By averaging the difference between the measured wind and turbine directions, one should find a value close to zero since the turbine controller aims to cancel this difference.

The alternative solution used in the invention is based on the above equation, from which an efficiency can be defined:

$$\eta \triangleq k \frac{P}{c_p \frac{8}{27} \rho A v^3} = k \cos^3(\alpha_{measured} - \alpha_{static\ error})$$

In this formula, k allows to take into account the fact that *P* can be larger than the theoretical value provided by a turbine power curve, and where the effective deviation $\alpha$ has been replaced with the difference between the measured deviation and the static error on this measured value.

The invented methods aims to detect the value of $\alpha_{measured}$ that maximizes this definition of the efficiency.

*Algorithm architecture*

Flow chart

The data is first extracted from the input standard files and is pre-processed to a unique format that can be provided to the algorithm. The pre-processed data is stored to avoid an extraction and preprocessing at each run of the algorithm. The stored data is loaded prior to a launch of the algorithm.

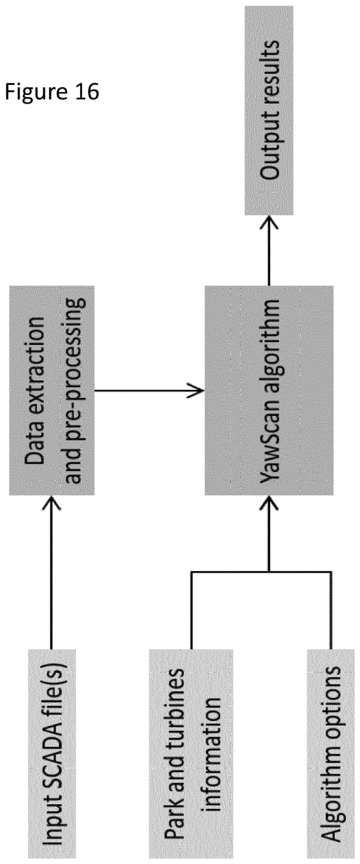

In addition to the data, information related to the park and turbines under analysis is provided to the algorithm, along with several options related to the filters and outputs results. A coarse grain view on the method is shown in Figure 16.

Input files

The input files are provided by the client or retrieved from an online platform. These files must contain at least the following variables:

1. Measurement timestamp
2. Turbine active power
3. Turbine nacelle direction
4. Wind speed
5. Wind direction

Additional information such as a turbine status can be included. If several turbines must be analyzed, the information can be provided in either a single file for all the turbines, or in separate files clearly labeled. If a single file is used for several turbines, an additional column must provide an identification number for each turbine.

The format of the file can be .xls (or other MS excel formats), or .csv.

The data should comply with the following specification:

1. The measurement timestamp provides the date and the time of measurement. A time step of 10 minutes is preferred. The longer the period covered by the data in a given configuration of the turbine controller, the more accurate and reliable the results.
2. The turbine active power is provided in units of kW, or clearly mentioned otherwise.
3. The turbine nacelle direction is provided in degrees between 0° and 359°, 0° corresponding to the North.
4. The wind speed is provided in m/s.
5. The wind direction is provided in degrees between 0° and 359°. It should be specified if the measure is absolute (i.e. relative to the North) or relative to the nacelle direction

Park and turbine information

The following elements are required:

1. Park name
2. Turbine type(s), for each turbine if several models are used in the park
3. The power curve of the turbine models (table of values)
4. If applicable, the rules of periodic curtailment (days of application, time of start and end of application, wind sectors of application, as well as possible seasonal variations)
5. Other periods of maintenance-related curtailment occurring during the analysed time period should be specified

Detailed description of the algorithm

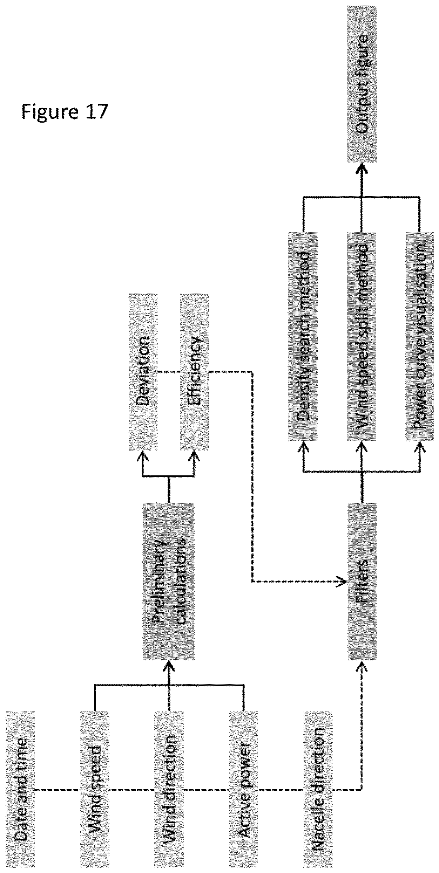

Figure 17 shows a more fine grain view on an embodiment of the invention.

Preliminary calculations

The algorithm is run on a series of cases. A case corresponds to a set of turbines and a given period of time. For each turbine in the current case, the following variables are obtained

- The **relative angle or deviation** between wind direction and nacelle direction is calculated. The variable is transformed such that the values are between -180° and +180°.

- The **active power efficiency** is calculated by dividing the measured active power by the theoretical active power at the corresponding measured wind speed. The theoretical active power corresponds to the power curve value at the given wind speed. A continuous power curve is used by interpolating the discrete power curve values with cubic splines.

In general, the algorithm is based on the measured wind speed, as being measured by one or several wind speed measurement sensors present on each wind turbine, and then being used for calculation above while related to the theoretical active power. According to an embodiment, it is however possible, that this measured wind speed needs to be corrected before being further used for calculations. Such corrections are for instance:

- Correction for air density: whenever the air density deviates from the reference density, the wind speed is corrected in order to represent a constant kinetic energy.
- Correction for instantaneous misalignment: from experience it is known that there can be a measurement error on the wind speed whenever there is a non-zere wind inflow angle. An empirical relationship is therefore developed based on previous LiDAR measurements.

Both of these correction factors can be taken into account to improve the accuracy of the algorithm.

Filtering the data

Several filters are applied, they are defined as follows:

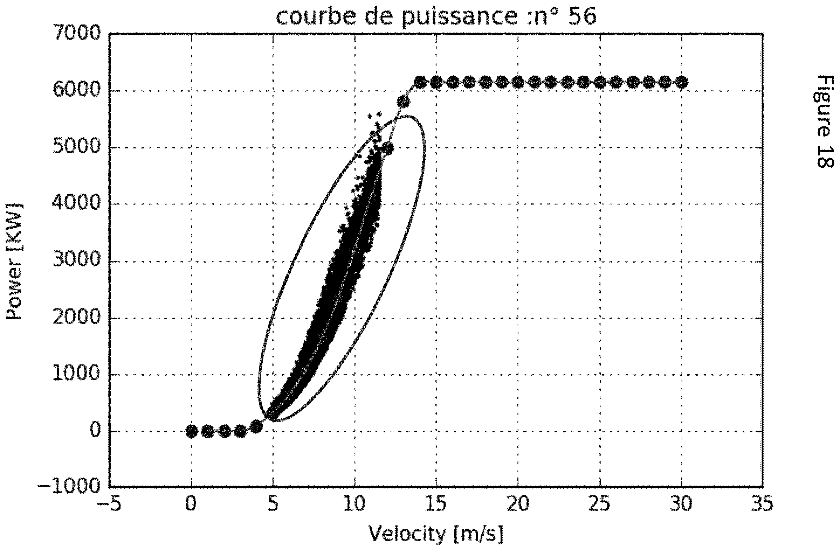

- **Time period filter:** Data before the start or after the end of the defined time period is discarded.
- **Week days filter:** Data is discarded if it corresponds to days of the week during which curtailment of the turbine is applied. Example: curtailment during the weekend.
- **Hours filter:** Data is discarded if it corresponds to hours during which curtailment is applied. Example: curtailment during the night. This filter is also used to keep only data points during the day, for atmospheric stability reason.
- **Wind speed filter:** This filter is used to keep only data points such that the wind speed is in the range in which the power curve is a cubic function. In this range, the methods of the algorithm can be used to detect misalignment values. Speed values below cut-in speed and beyond cut-out speed are discarded. Speed values just before and inside the range in which the active power output is saturated are discarded. The minimum wind speed and maximum wind speed depend on the power curve and therefore on the turbine model. See Figure 18.
- **Wind direction filter:** This filter allows to discard wind sectors in which the wind speed and direction cannot be accurately measured by the turbine equipment, for instance when the analyzed turbine is in the wake of another turbine or in any sector in which the wind is disturbed by an obstacle.
- **Active power efficiency filter:** This filter allows to keep only data points that are "close enough" to the theoretical power curve. This allows to remove data points with possible wind speed measurement errors, possible curtailed operating points and periods of time during which the turbine is not in operation despite a wind speed that would meet the wind speed filter requirements.
- **Deviation filter:** Data is discarded for calculated deviations that take extreme values and correspond to abnormal behavior of the turbine or measurement errors.

Methods for yaw misalignment determination

Density search method

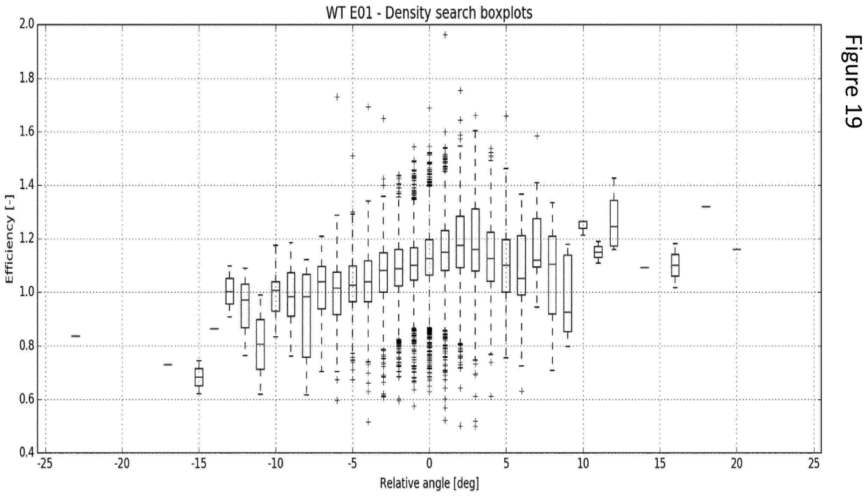

The density search method is the most reliable technique to this day. It provides the main decision tool to estimate the static yaw misalignment. It relies on the fact that in the set of data points ($\alpha_{measured}$, $\eta$), more points take higher efficiency values for $\alpha_{measured}$ close to $\alpha_{static\ error}$. As a consequence, the distribution of the efficiency gives an indication on $\alpha_{static\ error}$. However, this density trend must be observed along the efficiency dimension only, since the trend along the deviation dimension gives zero. A contour-plot method is not applicable. For this reason, a method of bins is applied to the set of points, and the distribution of the efficiency is obtained for each deviation bin. The distributions are displayed as boxplots. By means of a visual inspection, the static yaw misalignment is estimated at +2° for the turbine analyzed in the Figure 19.

Wind speed bins method

In theory, the efficiency defined earlier is a function of the deviation and of a parameter k. In a way, the parameter k takes into account the various conditions of operation that are included in the set of operating points (air density, etc.). If operating points corresponding to similar conditions can be selected, the parameter k becomes a constant and its variability is negligible.

Pushing this idea even further, if only a limited range of wind speeds is considered, then the normalization of the measured active power by the theoretical active power is not necessary anymore, and the measured active power is a function of the deviation only. This function is a cubic cosine that can be approximated by a quadratic function.

The wind speed bins method consists in filtering the data over short duration periods and sorting the operating points in wind speeds bins. A curve fitting provides a quadratic approximation of the $P$- $\alpha$ scatter plot. The deviation that maximizes the second order curve is an estimation of the static yaw misalignment at the corresponding wind speed.

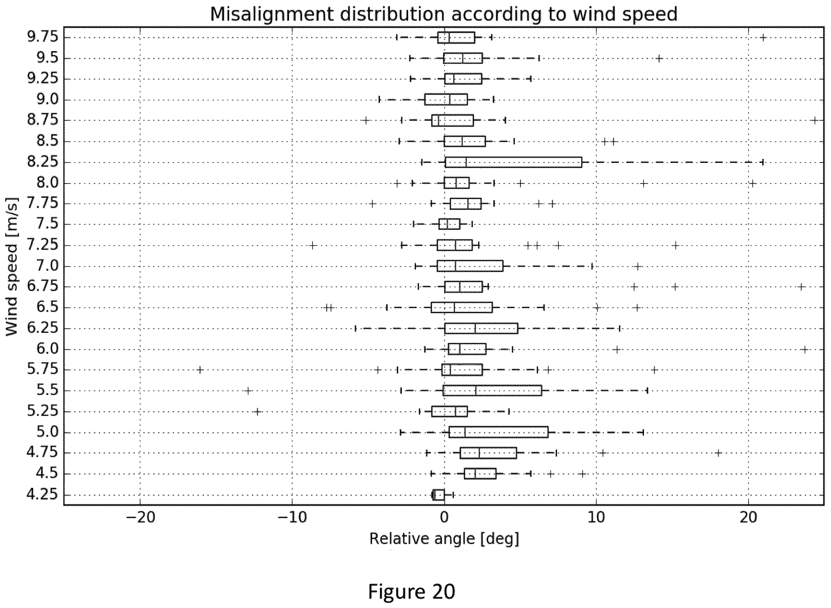

This method is applied on a large series of short time periods and the resulting misalignments are recorded for each period and each wind speed. The complete set of results provides a distribution of the yaw misalignment for each wind speed bin, as can be observed in Figure 20. This plot confirms the order of magnitude of 2° that was obtained with the density search method.

Output results description and interpretation

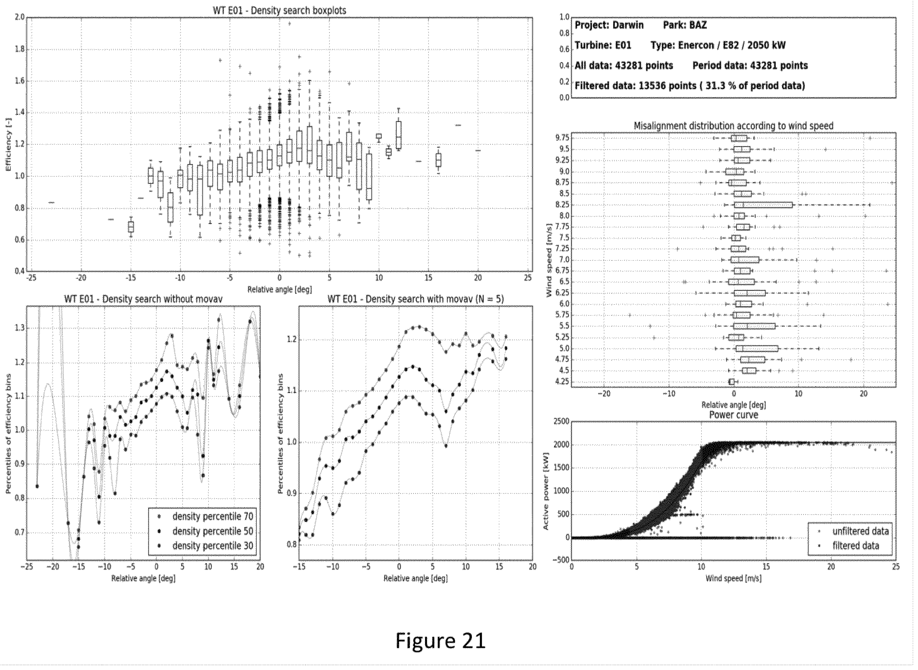

1) Figure 21.1 is the result of the density search method. The most reliable bins present the most outliers and the smallest standard deviation. Bins at the extremities should be used with care or neglected.

2) For readability, Figure 21.2 displays the percentiles 30, 50 and 70 of each boxplots from of the density search method. The median (percentile 50) should be used to make decisions on the value of the static misalignment. Percentiles 30 and 70 help in visualising the trends and the dispersion of the data in the boxplots.

3) For readability, Figure 21.3 provides the same information as in Figure 21.2 but a moving average with a window of N points is used to smoothen the trends and help in their visualisation. Figure 21.2 should be preferred to make decisions.

4) Frame 21.4 provides general information about the park and the turbine.

5) Figure 21.5 is the result of the wind speed bins method. It helps in the validation of the estimated value of the yaw misalignment.

6) Figure 21.6 displays the theoretical power curve and the available data points. The comparison between filtered and unfiltered data points helps in validating the filters applied to the dataset, at least regarding the wind speed filter, the efficiency filter and other filters related to the removal of operating points under turbine curtailment. Some measurement errors or problems in the original dataset can also be detected in this figure.

Alternatives and possible improvements

Theoretical angle method

This method is based on the formula that provides the active power as a function of effective yaw misalignment.

$$P = c_p \frac{8}{27} \rho A v^3 cos^3 \alpha$$

If all parameters are known or can be estimated, $\alpha$ can be isolated:

$$\alpha = \pm cos^{-1}\left( \sqrt[3]{\frac{27\,P}{8\,c_p\,\rho\,A\,v^3}} \right)$$

It appears that both signs are possible. In addition, not all parameters are readily available or easily estimated. Finally, the resulting value is the effective yaw misalignment, from which the static error still has to be extracted.

Curve fitting

The set of points in an efficiency-deviation plot should represent the summit of the *cos4a* function. As a consequence, the set of points could be approximated by a cosine, cubic cosine or polynomial functions. Once the scatter plot is approximated by a curve, it is easier to extract the deviation that maximizes the curve.

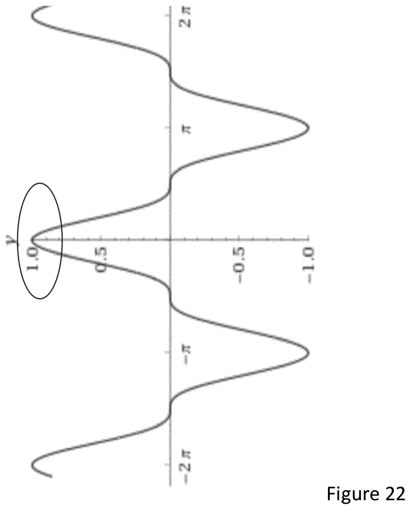

In general, attempts to fit curves and extract the deviation that maximizes the curve did not provide reliable values of static yaw misalignment, although acceptable trends could sometimes be obtained. This is generally due to the fact that the density of points is very important around deviations equal to zero. See Figure 22.

Cosine curve fitting

Cosine functions or cubic cosine functions can be used to approximate the points cloud. Three parameters can be adjusted for the fit: the amplitude, the frequency and the phase angle.

$$A \cos^3(w\alpha + k)$$

Polynomial curve fitting

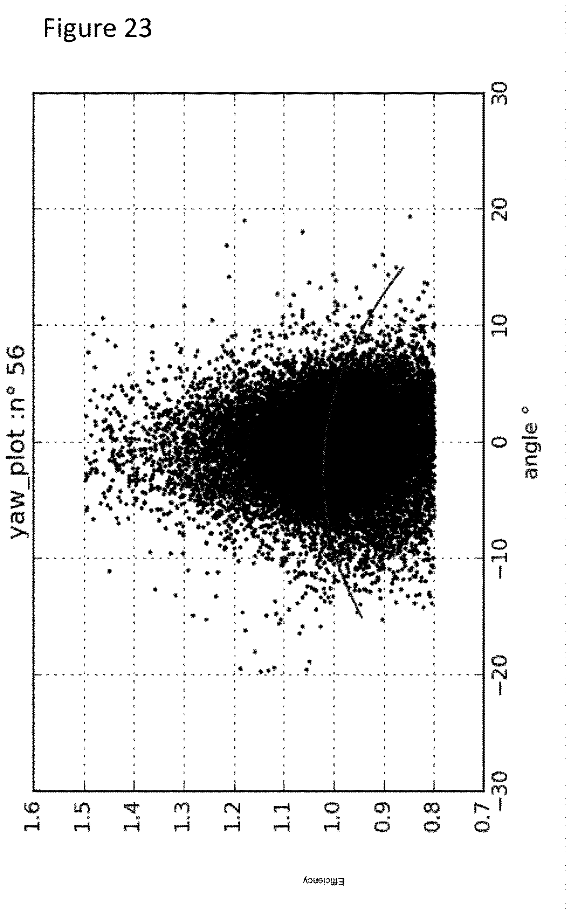

Quadratic or higher order polynomial functions can be used to approximate the points cloud. The wind speed bins method is a particular case of this method, in which the set of points is divided into wind speed bins. See Figure 23.

Original density search

The original density-based approach was an attempt to detect the limits of the points cloud. The distribution of the density of points was obtained along the deviation dimension. A position was chosen (for instance, 2 sigma along the positive values). The points in that deviation bin were selected and the distribution of their density was obtained along the efficiency dimension. The value of the efficiency at 2 sigma along the positive values is obtained for that dimension. The deviation value and the efficiency value provide a limit of the scatter plot on the basis of the density of points.

**Concluding statements**

The invention provides specific methods or combination of methods applicably for (directly or indirectly) the wind turbine control field. The above illustrations illustrate the challenging data to operate on. More over from the above theoretical elaborations it is clear that nonlinear data relationships occur and hence accordingly well-selected data handling including such field specifics such as suitable curve fitting is required. The above also reveals that while lots of the data is typically captured for direct real-time use and can thereafter in classical operation be discarded, here longer time observation, hence sufficient storage (memory) requirements and clear identification of the data (to which turbine it belongs and the capturing circumstances) must be provided for use of the invented methods.

**Claims**

1. A method for determining a misalignment (10) of a the wind orientation sensor attached to a wind turbine with respect to an axis of a rotor of said wind turbine; the method (420) comprising the steps of: (i) inputting a plurality of data points (20), each data point relating the wind turbine performance versus wind orientation as measured by said wind orientation sensor itself or via an extra equipment (1010); (ii) classifying (400) said data points in a plurality of data sets (50, 51) to thereby determining a classification; (iii) applying to each of said data sets a method for determining the misalignment (10) of the wind orientation sensor (100) attached to the wind turbine (110) with respect to the axis (120) of the rotor (130) of said wind turbine, the method (200) comprising the steps of: (a) inputting (210) the data points of one of said data sets; (b) computing (220) a characteristic of a curve defined by said data points of the data set; (c) determining (230) said misalignment from said characteristic; and (iv) combining (410) the results thereof to determine said misalignment (10), **characterised in that** said classification is based on the time (90) of measurement of said data points.

2. The method of claim 1, wherein said characteristic is the wind orientation for which a maximum wind turbine performance is obtained.

3. The method of claim 2, wherein said misalignment being defined by said wind orientation for which a maximum wind turbine performance is obtained.

4. The method of any of the previous claims, wherein prior to said step of computing said characteristic, a smoothing step (240) is applied.

5. The method of claims 1 to 4, wherein said classification is further based on the wind speed (93) measured at the time of measurement of said data points.

6. The method of claim 1 to 5, wherein said classification is further based on extra atmospheric conditions (95) measured at the time of measurements of said data points.

7. The method of any of the claims 1 to 6, wherein said combining (410) is based on a weighted sum, wherein said weights (60, 61) are based on a measure indicative for the quality of the computation of said characteristic of the respective curves.

8. A method (540) for performing yaw control of a wind turbine, said method comprising the step of: (i) determining (500) the wind orientation sensor misalignment by any of the previous methods according to claims 1 to 7; (ii) determining (510) the wind orientation (40) by said wind orientation sensor; (iii) correcting (520) said wind orientation (40) to a corrected value (70) by said determined wind orientation sensor misalignment; and (iv) apply a yaw control method (530) based on said corrected wind orientation to thereby determine yaw control signals (80).

9. A computer system, provided with a computing engine and memory connected thereto, adapted for executing the method according to any of the claims 1 to 7.

10. A wind turbine arrangement, comprising a wind turbine and a computer system as in claim 9.

**Patentansprüche**

1. Verfahren zum Bestimmen einer Fehlausrichtung (10) eines an einer Windturbine montierten Windausrichtungssensors in Bezug auf eine Achse eines Rotors der Windturbine; wobei das Verfahren (420) die folgenden Schritte umfasst: (i) Eingeben einer Vielzahl von Datenpunkten (20), wobei jeder Datenpunkt die Windturbinenleistung gegenüber der Windausrichtung in Beziehung setzt, wie sie durch den Windausrichtungssensor selbst oder über eine zusätzliche Ausrüstung (1010) gemessen wird; (ii) Klassifizieren (400) der Datenpunkte in mehreren Datensätzen (50, 51) um dadurch eine Klassifikation zu bestimmen; (iii) Anwenden eines Verfahrens zum Bestimmen der Fehlausrichtung (10) des an einer Windturbine (110) montierten Windausrichtungssensors (100) in Bezug auf die Achse (120) des Rotors (130) der Windturbine, wobei das Verfahren (200) die folgenden Schritte umfasst: (a) Eingeben (210) der Datenpunkte eines der Datensätze; (b) Berechnen (220) einer Charakteristik einer Kurve, die durch die Vielzahl von Datenpunkten des Datensätzes definiert is; (c) Bestimmen (230) der Fehlausrichtung aus der Charakteristik;

und (iv) Kombinieren (410) ihrer Ergebnisse, um die Fehlausrichtung (10) zu bestimmen, **dadurch gekennzeichnet, dass** die Klassifizierung auf der Zeit (90) der Messung der Datenpunkte basiert.

2. Verfahren nach Anspruch 1, wobei die Charakteristik die Windausrichtung ist, für die eine maximale Windturbinenleistung erhalten wird.

3. Verfahren nach Anspruch 2, wobei die Fehlausrichtung durch die Windausrichtung definiert ist, für die eine maximale Windturbinenleistung erhalten wird.

4. Verfahren nach einem der vorhergehenden Ansprüche, wobei vor dem Schritt des Berechnens der Charakteristik ein Glättungsschritt (240) angewendet wird.

5. Verfahren nach den Ansprüchen 1 bis 4, wobei die Klassifizierung ferner auf der zum Zeitpunkt der Messung der Datenpunkte gemessenen Windgeschwindigkeit (93) basiert.

6. Verfahren nach Anspruch 1 bis 5, wobei die Klassifizierung ferner auf außeratmosphärischen Bedingungen (95) basiert, die zum Zeitpunkt der Messung der Datenpunkte gemessen wurden.

7. Verfahren nach einem der Ansprüche 1 bis 6, wobei das Kombinieren (410) auf einer gewichteten Summe basiert, wobei die Gewichte (60, 61) auf einem Maß basieren, das die Qualität der Berechnung der Charakteristik der jeweiligen Kurven anzeigt.

8. Verfahren (540) zum Durchführen einer Windnachführung einer Windturbine, wobei das Verfahren den folgenden Schritt umfasst: (i) Bestimmen (500) der Fehlausrichtung des Windausrichtungssensors durch eines der vorherigen Verfahren nach den Ansprüchen 1 bis 7; (ii) Bestimmen (510) der Windausrichtung (40) durch den Windausrichtungssensor; (iii) Korrigieren (520) der Windausrichtung (40) auf einen korrigierten Wert (70) durch die ermittelte Fehlausrichtung des Windausrichtungssensors; und (iv) Anwenden eines Windnachführungsverfahrens (530) basierend auf der korrigierten Windausrichtung um dadurch Windnachführungssignale (80) zu bestimmen.

9. Ein Computersystem, das mit einer Rechenmaschine und einem damit verbundenen Speicher ausgestattet ist und zum Ausführen des Verfahrens nach einem der Ansprüche 1 bis 7 geeignet ist.

10. Eine Windturbinenanordnung, umfassend eine Windturbine und ein Computersystem nach Anspruch 9.

## Revendications

1. Procédé de détermination d'un désalignement (10) d'un capteur d'orientation du vent fixé sur une éolienne par rapport à un axe d'un rotor de ladite éolienne ; le procédé (420) comprenant les étapes consistant à : (i) saisir une pluralité de points de données (20), chaque point de données faisant référence à la performance d'éolienne par rapport à l'orientation du vent telle que mesurée par ledit capteur d'orientation du vent lui-même ou par un équipement supplémentaire (1010) ; (ii) classifier (400) lesdits points de données dans une pluralité d'ensembles de données (50, 51) pour déterminer ainsi une classification ; (iii) appliquer à chacun desdits ensembles de données un procédé permettant de déterminer le désalignement (10) du capteur d'orientation du vent (100) fixé à l'éolienne (110) par rapport à l'axe (120) du rotor (130) de ladite éolienne, le procédé (200) comprenant les étapes consistant à: (a) saisir (210) les points de données de l'un desdits ensembles de données; (b) calculer (220) une caractéristique d'une courbe définie par ladite pluralité de points de données de l'ensemble de données; (c) déterminer (230) ledit désalignement par rapport à ladite caractéristique ;
et (iv) combiner (410) les résultats de celle-ci pour déterminer ledit désalignement (10), **caractérisé en ce que** ladite classification est basée sur le moment (90) de mesure desdits points de données.

2. Procédé selon la revendication 1, dans lequel ladite caractéristique est l'orientation du vent pour laquelle une performance maximale d'éolienne est obtenue.

3. Procédé selon la revendication 2, dans lequel ledit désalignement est défini par ladite orientation du vent pour laquelle une performance maximale d'éolienne est obtenue.

4. Procédé selon l'une quelconque des revendications précédentes, dans lequel, avant ladite étape consistant à calculer ladite caractéristique, une étape de lissage (240) est appliquée.

5. Procédé selon les revendications 1 à 4, dans lequel ladite classification est en outre basée sur la vitesse du vent (93) mesurée au moment de la mesure desdits points de données.

6. Procédé selon la revendication 1 à 5, dans lequel ladite classification est en outre basée sur des conditions atmosphériques supplémentaires (95) mesurées au moment des mesures desdits points de données.

7. Procédé selon l'une quelconque des revendications 1 à 6, dans lequel ladite étape consistant à combiner (410) est basée sur une somme pondérée, dans lequel lesdits poids (60, 61) sont basés sur une mesure indicative de la qualité du calcul de ladite caractéristique des courbes respectives.

8. Procédé (540) de réalisation de contrôle en lacet d'une éolienne, ledit procédé comprenant les étapes consistant à : (I) déterminer (500) le désalignement du capteur d'orientation du vent par l'un des procédés précédents selon les revendications 1 à 7; (ii) déterminer (510) l'orientation du vent (40) par ledit capteur d'orientation du vent; (iii) corriger (520) ladite orientation du vent (40) sur une valeur corrigée (70) par ledit désalignement du capteur d'orientation du vent déterminé ; et (iv) appliquer un procédé de contrôle en lacet (530) basé sur ladite orientation du vent corrigée pour déterminer ainsi des signaux de contrôle en lacet (80).

9. Système informatique, pourvu d'un moteur informatique et d'une mémoire raccordés à celuici, adapté pour exécuter dans le procédé selon l'une quelconque des revendications 1 à 7.

10. Agencement d'éolienne, comprenant une éolienne et un système informatique selon la revendication 9.

Figure 1

Figure 2

Figure 3

Turbine Performance

30

20

50

50

10

0

Wind orientation relative to rotor axis

40

Figure 4

Figure 5

Figure 6

Figure 7

Figure 8

Figure 9

Figure 10

Figure 11

Figure 12    (Prior-art)

## Figure 13

EP 3 569 859 B1

PHASE A: DETERMINE MISALIGMENT

PHASE B: CONTROL

510, 940

40

520, 950

10

70

530, 960

80

A    B    A    B    A

Figure 14

27

Figure 15

(a)

(b)

Figure 16

Data extraction and pre-processing

YawScan algorithm

Output results

Input SCADA file(s)

Park and turbines information

Algorithm options

Figure 17

Figure 18

Figure 19

Misalignment distribution according to wind speed

Figure 20

Figure 21

EP 3 569 859 B1

Figure 22

## Figure 23

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017268484 A1
- WO 2017108063 A1